# EUROPEAN PATENT APPLICATION

(11) **EP 3 015 963 A1**
(43) Date of publication of application: **04.05.2016**
(21) Application number: 13888066.1
(22) Date of filing: 25.06.2013
(51) Int. Cl.: G06F 3/048, G06F 3/0346, G06F 3/041, G06F 3/0488

(54) **INFORMATION PROCESSING DEVICE AND PROGRAM**

(71) Applicant: Fujitsu Limited, Kawasaki-shi, Kanagawa 211-8588 (JP)
(72) Inventor: TAGUCHI, Akinori, Kawasaki-shi Kanagawa 211-8588 (JP)
(74) Representative: Wilding, Frances Ward
(86) International application number: PCT/JP2013/067423
(87) International publication number: WO 2014/207828

(57) **Abstract**

A line of sight detector (21,31) detects a line of sight of a user. A first region determination unit (3,37) determines a first region on a display screen in which first information indicating an input method using a movement of the user is displayed in accordance with a line of sight position on the display screen. A first display controller (3,39) displays the first information in the first region. An input detector (3,41) detects an input from the user. A second region determination unit (3,43) determines a second region in which second information indicating a trace that corresponds to the movement of the user is displayed. The second region is a region other than the first region and including a point located farther from the line of sight position than the first region. The second display controller (3,45) displays the second information in the second region.

## Description

### Technical Field

The invention is related to an information processing device and a program.

### Background Art

As a result of improvements in performance and functioning of information processing devices such as portable terminals, there has been increasing opportunities for using, for example, a portable terminal in various situations or for various purposes. Accordingly, there has been an increasing number of requests to be able to perform an input operation via a hand holding a portable terminal equipped with a touch panel. These requests are for situations such as hanging onto a strap in a train, holding a bag or an umbrella, or lying down. Therefore, an interface that enables an input operation while holding a portable terminal is desired.

As an example, a technology for detecting a position of a gaze of a user so as to generate gaze information, determining a position in which guide information for assisting the user in an input operation is represented, and performing control so as to represent the guide information in the determined position is known. This technology enables the guide information to be represented in the vicinity of the position of a gaze of the user (see, for example, Patent Document 1).

### Prior Art Documents

### Patent Documents

Patent Document 1: Japanese Laid-open Patent Publication No. 2000-250677

### Summary of the Invention

### Problems to be Solved by the Invention

When an input method that temporally changes is used, such as an input operation using a movement of fingers on a touch panel, the movement of fingers may be displayed on a screen such that a user can recognize the type of input operation. However, as an example, in a case in which there are a plurality of options that a user can use for input and an input guide indicating input methods for selecting the respective options is displayed, if a display relating to the input movement is displayed in such a way that it overlaps the input guide, it is difficult to view the input guide. When a user does not memorize an input operation method, it is difficult for the user to view the input guide in the middle of an input operation, and the user may be confused about the movement of fingers or the like for a desired input operation. When the input guide is greatly separated from the display relating to the input movement, a user needs to move a line of sight so as to confirm the input guide and the display. As described above, it is difficult to lay out a display so as to simultaneously confirm the input guide and information relating to the movement for an input operation.

It is an object in one aspect of the embodiments to simultaneously recognize an input guide displayed in a position according to a line of sight position and the progress of an input operation due to a movement without moving a line of sight.

### Means for Solving the Problems

An information processing device according to one aspect of the embodiments includes a line of sight detector, a first region determination unit, a first display controller, an input detector, a second region determination unit, and a second display controller. The line of sight detector detects a line of sight of a user. The first region determination unit determines a first region on a display screen in which first information indicating an input method using a movement of the user is displayed, in accordance with a line of sight position on the display screen of the detected line of sight. The first display controller displays the first information in the first region. The input detector detects an input from the user. The second region determination unit determines a second region in which second information indicating a trace that corresponds to the movement of the user for the detected input is displayed. The second region being a region other than the first region and including a point located farther from the line of sight position than the first region. The second display controller displays the second information in the second region.

### Effect of the Invention

In the information processing device according to the embodiment, an input guide displayed in a position according to a line of sight position and the progress of an input operation due to a movement can be simultaneously recognized without moving a line of sight.

### Brief Description of Drawings

FIG. 1 is a block diagram illustrating an example of a hardware configuration of a portable terminal device.
FIG. 2 is a block diagram illustrating an example of functions of a portable terminal device.
FIG. 3 is a diagram conceptually explaining an example of an input method according to an embodiment.
FIG. 4 is a diagram conceptually explaining an example of an input method according to an embodiment.
FIG. 5 illustrates an example of a display region.

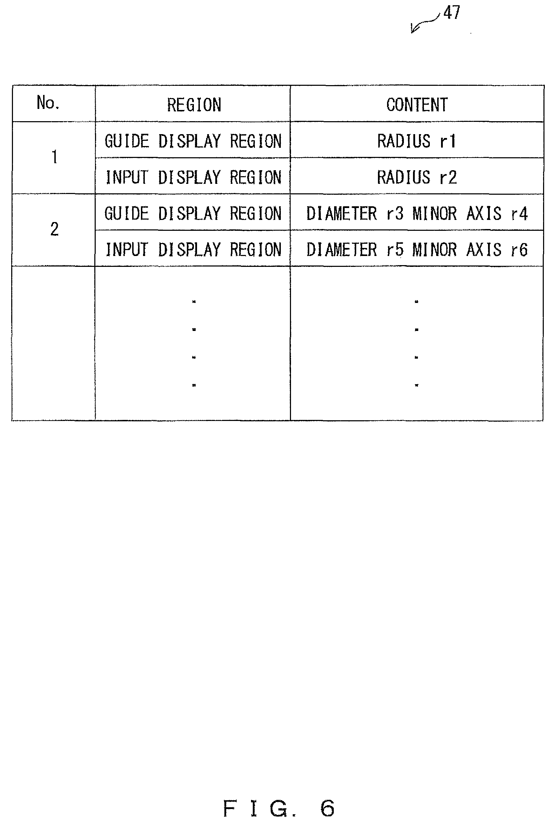

FIG. 6 illustrates an example of display position determination information.
FIG. 7 is a flowchart illustrating input processing in a portable terminal device.
FIG. 8 illustrates an exemplary input display in variation 1.
FIG. 9 illustrates a variation of a guide display region and an input display region.
FIG. 10 illustrates a variation of a guide display region and an input display region.
FIG. 11 illustrates a variation of a guide display region and an input display region.
FIG. 12 is a block diagram illustrating an example of a hardware configuration of a typical computer.

### Embodiments to Implement the Invention

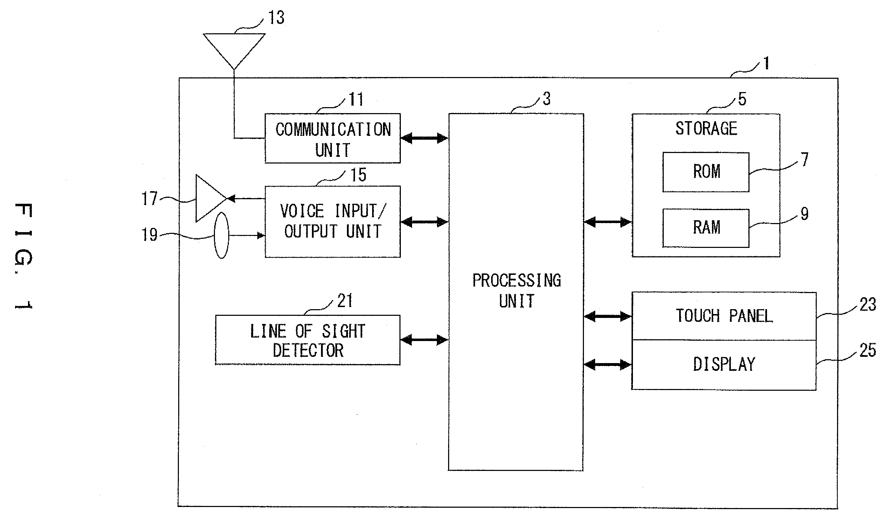

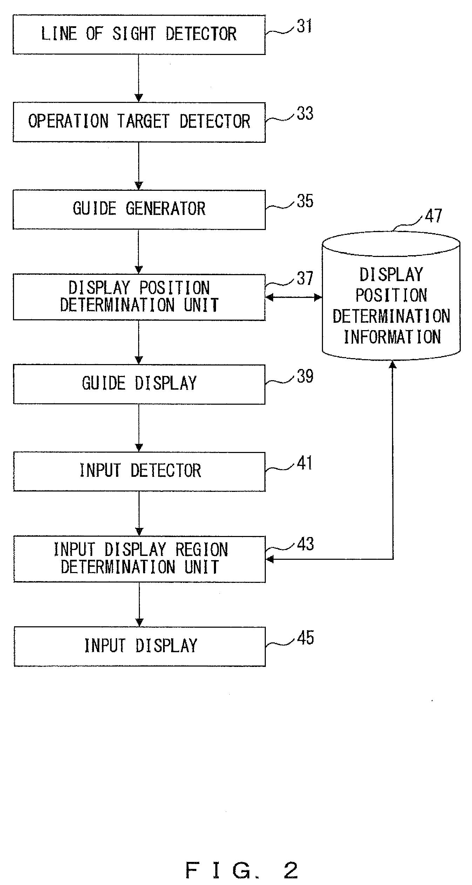

With reference to the drawings, a portable terminal device 1 according to an embodiment is described below. FIG. 1 is a block diagram illustrating an example of a hardware configuration of the portable terminal device 1, and FIG. 2 is a block diagram illustrating an example of functions of the portable terminal device 1.

The portable terminal device 1 includes a processing unit 3, a storage 5, a communication unit 11, an antenna 13, a voice input/output unit 15, a speaker 17, a microphone 19, a line of sight detector 21, a touch panel 23, a display 25, and the like. Examples of the portable terminal device 1 include a multi-functional portable telephone and a tablet computer.

The processing unit 3 is a processing unit that performs data processing accompanying an operation in the portable terminal device 1. The storage 5 is a storage that stores information, and includes a Read Only Memory (ROM) 7 and a Random Access Memory (RAM) 9. The ROM 7 is a non-transitory readable storage, and may be configured to store a program for causing the portable terminal device 1 to perform a specified process. The RAM 9 is a non-transitory readable/writable storage, and may be configured to store information such as an operation result.

A radio unit 11 is a device that converts information communicated to the outside so as to generate a signal to be transmitted via the antenna 13 via radio communication, or converts a signal received by the antenna 13 and outputs the converted signal to the processing unit 3. The antenna 13 is a device that transmits and receives a radio wave. Examples of radio communication include the 3rd Generation (3G) network and the Wi-Fi (trademark) network.

The voice input/output unit 15 is a device that converts information to be output by voice and outputs the converted information to the speaker 17, and converts an input signal from the microphone 19 and outputs the converted signal to the processing unit 3. The speaker 17 is a device that converts an electrical signal and outputs sound. The microphone 19 is a device that collects sound and converts the sound into an electrical signal.

The line of sight detector 21 may include, for example, a camera, a light source, and the like. The line of sight detector 21 detects a line of sight (or "line of gaze"), for example, by photographing the eyes of a user. The touch panel 23 is a device to which information is input by touching. The display 25 is, for example, a liquid crystal display that displays information.

As illustrated in FIG. 2, the portable terminal device 1 includes a line of sight detector 31, an operation target detector 33, a guide generator 35, a display position determination unit 37, a guide display 39, an input detector 41, an input display region determination unit 43, an input display 45, and display position determination information 47. These functions are implemented, for example, by the processing unit 3 reading and executing a program stored in the RAM 9.

The line of sight detector 31 detects a line of sight, for example, by analyzing an image of eyes of a user that is obtained by the line of sight detector 21. Detection of a line of sight is initiated when initiation of line of sight detection is input, for example, via the touch panel 23. The operation target detector 33 detects a line of sight position on the display 25 according to the line of sight detected by the line of sight detector 31, and detects a target displayed at the line of sight position as an operation target.

The guide generator 35 generates an input guide indicating options according to processes that can be performed on the detected operation target and input methods that respectively correspond to the options. The display position determination unit 37 determines a position in which the generated input guide is displayed. The display position determination unit 37 may determine a display position such that the center of the input guide generated by the guide generator 35 is located, for example, in a line of sight position detected by the line of sight detector 31. It is preferable that the display position determination unit 37 set a range in which display is performed according to the line of sight position detected by the line of sight detector 31.

The guide display 39 displays the generated input guide in the position determined by the display position determination unit 37. In this case, the guide display 39 may display the input guide within the range set by the display position determination unit 37. It is preferable that the input guide include a trace according to a movement to perform an input, such as a movement of fingers on the touch panel 23 , for selecting an option.

The input detector 41 detects an input to select any of the options displayed in the input guide. The input display region determination unit 43 determines a region for displaying a trace according to the detected input. It is preferable that the input display region determination unit 43 determine a display region so as to not overlap the input guide displayed in the position or range determined by the display position determination unit 37. In a case in which a movement is displayed, it is known that the movement can be recognized even in a position that is farther from a line of sight, compared with information for which characters needs to be recognized. Therefore, a position in which the input guide is displayed may be set so as to be closer to the line of sight position, and a position in which a display according to a movement is performed may be set so as to be farther from the line of sight position than the position in which the input guide is displayed. The input display 45 performs a display according to an input in a position determined by the display position determination unit 37.

The display position determination information 47 is information for determining shapes of a guide display region and an input display region. The display position determination information 47 may include a radius r1 of the guide display region and a radius r2 of the input display region, or a major axis r3 and a minor axis of the guide display region and a major axis r5 and a minor axis r6 of the input display region, for example, for each display rule. In the example of the display position determination information 47, for example, the regions are represented by a circle or an ellipse. A plurality of rules may be prepared so as to be changed in accordance with a selected operation target. The display position determination information 47 is referenced by the display position determination unit 37 and the input display region determination unit 43.

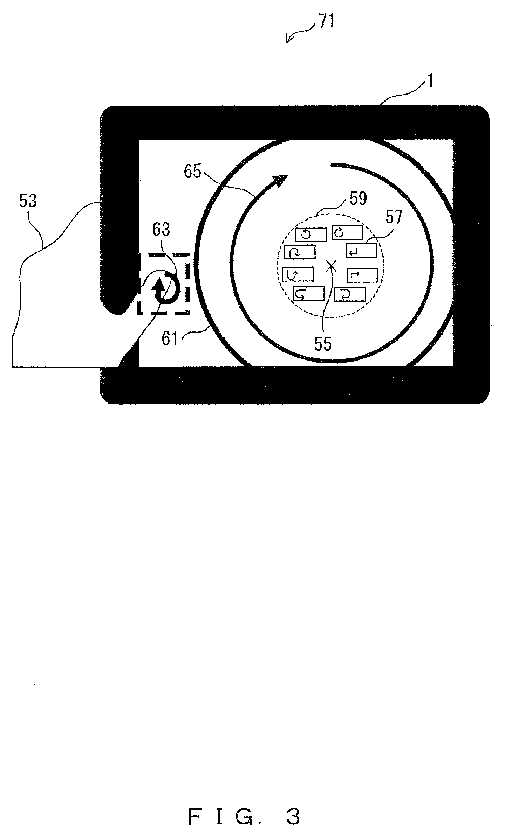

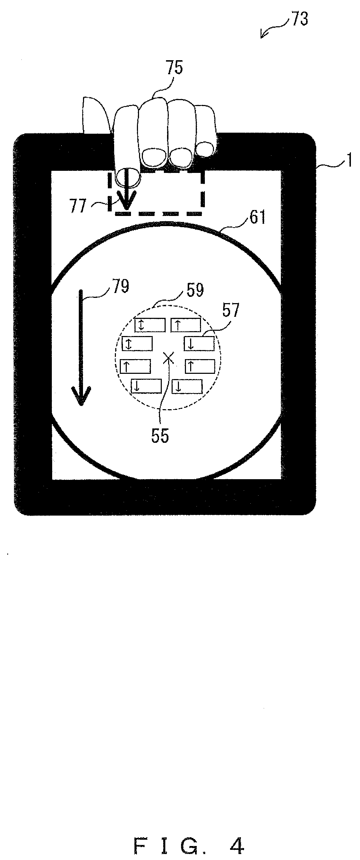

FIGS. 3 and 4 are diagrams conceptually explaining an example of an input method according to the embodiment. As illustrated in FIG. 3, an input example 71 depicts an exemplary display in a case in which a hand 53 of a user performs an input operation while holding the portable terminal device 1. An example of the input operation is displayed on a screen.

An input guide 57 is information including options and input methods for selecting the options. It is preferable that in the input guide 57, selectable processes and input methods that temporally change, such as a movement of a user's body that corresponds to an input device or a usage environment, be associated with each other. As an example, in the input guide 57, an input having a downward movement may be specified for a process of vertically moving an operation target. In the input guides 57 of FIGS. 3 and 4, a movement needed for an input operation is represented with an arrow; however, the movement needed for an input operation may be displayed in association with a specified process performed on an operation target.

A guide display region 59 is a region determined according to a position 55 of a line of sight detected in advance, and is a region in which the input guides 57 are displayed. The guide display region 59 may be, for example, a region that can be recognized in a central vision, in which, for example, colors or shapes of objects can be recognized. In this case, it is preferable that an input operation represented by the input guides 57 include a movement such as a vertical movement or a horizontal movement.

An input display region 61 is a region in which display is performed according to a movement that is input with a selection method selected according to the input guides 57, such as a touch operation, or a series of movements. The input display region 61 may be a region that can be recognized in a peripheral vision, in which, for example, a movement of an object can be recognized.

An input 63 represents a state in which a user performs an input operation having a movement according to an option to be selected with the hand 53 while viewing the input guides 57 with the portable terminal device 1 held in the hand 53. As an example, a movement to draw a circle, as represented by the input 63, may be input. An input display 65 represents a trace of a movement similar to the detected input 63 with an arrow, and is displayed in the input display region 61. It is preferable that the input display 65 continue to be sequentially performed during an input operation.

As illustrated in FIG. 4, an exemplary input 73 depicts another example of a case in which an input operation is performed with the portable terminal device 1 held in a hand 75 of a user. The exemplary input 73 is an example in which a user inputs a linear movement such as an input 77 with the hand 75 while viewing the input guides 57. The input 77 represents a movement to perform an input operation with the hand 75. An input display 79 represents a movement of the input 77, and is displayed in the input display region 61.

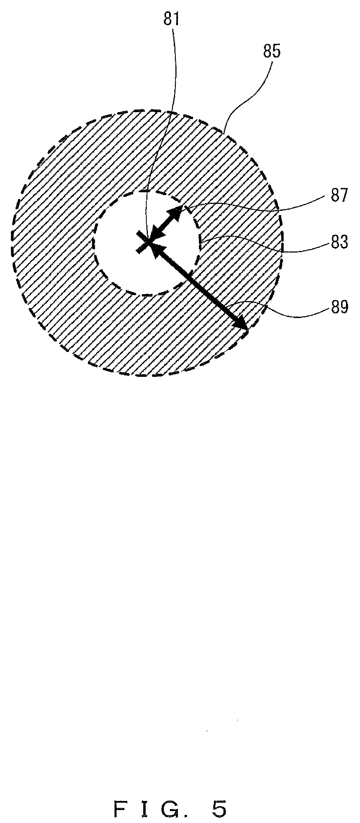

FIG. 5 illustrates an example of a display region. In the example illustrated in FIG. 5, a guide display region 83 and an input display region 85 are illustrated. The guide display region 83 is a region in which an input guide including options and input methods for selecting the options is displayed. The input display region 85 is a region in which a movement to perform selection according to the input guide is displayed. The guide display region 83 has the shape of a circle having a radius of a distance 87 around a line of sight position 81. The input display region 85 has the shape of a circle having a radius of a distance 89 around the line of sight position 81, and is a portion other than the guide display region 83. In this example, the input display region 85 is a region adjacent to the outside of the guide display region 83, and includes a point having a distance from the line of sight position 81 that is farther than the distance of the guide display region 83.

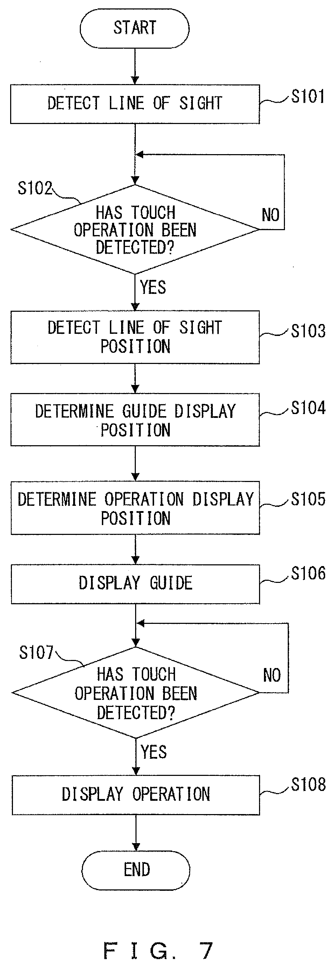

FIG. 7 is a flowchart illustrating input processing in the portable terminal device 1 according to the embodiment. Respective processes illustrated in FIG. 7 are performed by causing, for example, the processing unit 3 to read and execute a specified program; however, the description below is given under the assumption that the respective processes are performed by the functions illustrated in FIG. 2.

As illustrated in FIG. 7, the line of sight detector 31 initiates detection of a user's line of sight (S101). The detection of a line of sight may be performed in a detection method by performing an image analysis, as described above, or in any other conventional methods. The operation target detector 33 repeats detection until a touch operation as a trigger for the initiation of detection of an operation target, for example, in a specified position on the touch panel 23 is detected (S102: NO). When an input is not detected during a specified time period, the process may be finished.

When a touch operation is detected (S102: YES), the operation target detector 33 detects the line of sight position 55 on the display 25 of a line of sight at the time of detecting the touch operation, as illustrated in FIGS. 3 and 4, and detects an operation target according to the detected line of sight position 55 (S103). As an example, the operation target detector 33 detects an image displayed in the line of sight position 55 as an operation target.

The display position determination unit 37 refers to items of the guide display regions in the display position determination information 47, and determines the guide display region 83, as illustrated in FIG. 5, for example, and also determines a display position of the input guides 57 illustrated in FIGS. 3 and 4, for example, within the guide display region 83 (S104).

The input display region determination unit 43 refers to items of input display regions in the display position determination information 47, and determines the input display region 85 illustrated in FIG. 5, for example, and also determines a position in which an input is displayed within the input display region 85 (S105).

The guide generator 35 generates an input guide according to the detected operation target. The guide display 39 displays the generated input guide in the determined position (S106). In this case, as an example, the guide display 39 arranges the center of the input guide in a specified position of the determined guide display region 83. In addition, the guide display 39 may adjust a display magnification such that the input guide is displayed within the guide display region 83.

The input detector 41 determines whether an input with a movement on the touch panel 23 or the like has been detected (S107). As described with reference to FIGS. 3 and 4, for example, when the input detector 41 detects the input 63, the input 77, or the like (S107: YES), the input display 45 sequentially displays the input in a specified position, for example, of the input display region 85 determined by the input display region determination unit 43 (S108), and the process is returned to S107. It is not necessary to detect a line of sight, for example, during a time period after the input guides 57 are displayed and before the display of the input is finished.

In S107, a process is repeated until a touch operation is detected (S107: NO). In S107, the input detector 41 may repeat the process of S107, for example, until a specified time period has passed, and may finish the process after the specified time period has passed. By repeating the processes of S107 and S108, an input operation is performed while sequentially confirming an input state visually. In this case, a process is performed according to the input detected by the input detector 41.

As described above in detail, in the portable terminal device 1 according to the embodiment, when an input as a trigger is detected, the line of sight detector 31 detects, for example, the line of sight position 55 on the display 25 of a line of sight. The operation target detector 33 detects an operation target according to the detected line of sight position 55. The guide generator 35 generates the input guide 57 that corresponds, for example, to the operation target. In addition, the display position determination unit 37 refers to the display position determination information 47 so as to determine the guide display region 83, for example, according to the detected line of sight position 55. When the input detector 41 detects an input with a movement according to the input guide, the input display region determination unit 43 determines, for example, the input display region 85. The input display 45 displays the movement of the input. In this case, the input display region 85 is determined so as to be a region other than the guide display region 83 and to include a point that is located farther from the line of sight position 55 than any points within the guide display region 83.

As described above, in the portable terminal device 1 according to the embodiment, an operation target can be detected according to a line of sight position. An input for selecting a process to be performed on the operation target can be performed while visually confirming a movement of fingers, for example, on the touch panel 23. As a result, an operation target can be determined only when a user desires to perform an input operation and directs their line of sight, without determining all of the objects viewed by the user to be operation targets. Therefore, the input guide is not displayed around the line of sight position unless needed, and an action of viewing a display is not hindered.

In the embodiment, line of sight detection has been initiated in advance or is always running, and when a touch operation or the like as a trigger is detected, a line of sight position on a screen is detected according to line of sight information at the time of detecting the touch operation. As a result, the line of sight position can be estimated by using past line of sight information, and a case in which a line of sight fails to be detected, for example because a user blinks at the time of detecting a trigger, can also be coped with.

As an example, the input guide 57 is displayed in the guide display region 83 according to the line of sight position 55, and therefore the input guide 57 that explains input operations can be referred to without moving a line of sight. The input display region 85 is a region other than the guide display region 83, and includes a point that is located farther from the line of sight position 55 than all of the points in the guide display region 83. As described above, the input guide 57 is displayed within a visual field in which, for example, colors or shapes can be recognized, and therefore a user can perform an input operation in a state in which the user can confirm, for example, a movement of fingers without moving the line of sight, while referring to the input guide 57.

An input display indicating an input movement is displayed in a visual field in which a movement can be recognized, and therefore, the input movement can be visually confirmed. In this case, the input guide 57 does not overlap the input display 65, 79, or the like, and this prevents an input operation from impeding the reference to the input guide 57. A method for setting the guide display region 83 and the input display region 85 can be defined in advance by the display position determination information 47 or the like. Therefore, the input guide 57, the input display 65, the input display 79, and the like can be displayed corresponding to an operation target.

As described above, the input method according to the embodiment may be an input method using, for example, a relationship between a central visual field and a peripheral visual field wherein a visual field in which movements can be recognized is wider than a visual field in which characters or the like can be recognized because of the characteristic of a visual field. This relationship means a relationship wherein, when a line of sight is located in a certain position, there is a region where characters fail to be recognized but movements can be recognized. Therefore, by dividing the guide display region from a display region of an input state such that a state of an input using a movement is displayed in a region outside a region in which the input guide 57 is displayed, the input guide and the sequence of input can be recognized simultaneously without moving a line of sight.

Therefore, even when a user does not memorize an input operation, the user can view an input in the middle of the input operation, and this prevents the user from being confused about the movement of fingers or the like for an input operation that the user desires to perform. Unlike a case in which the input guide and a display relating to an input movement are greatly separated from each other, a user does not need to move a line of sight in order to confirm both the input guide and the display relating to the input movement.

As described above, when an input guide is displayed in a position that corresponds to a detected line of sight position, the input guide can be laid out automatically in a position in which a display of the sequence of input using a movement can be recognized without moving a line of sight, without reducing a visibility of the input guide.

### <Variation 1>

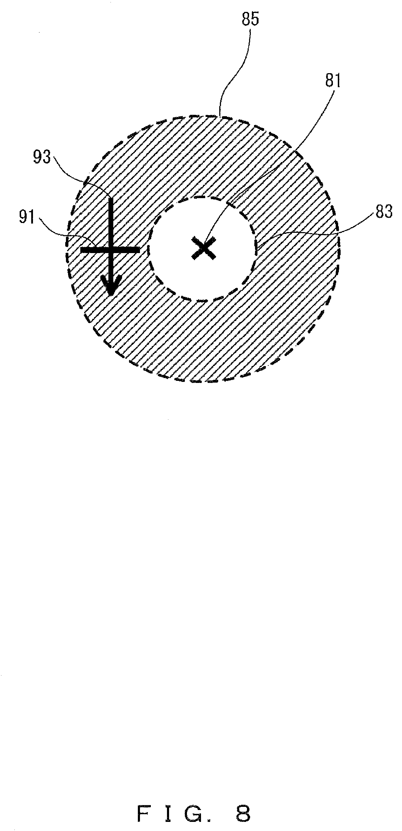

With reference to FIG. 8, a variation of an input display is described below. FIG. 8 illustrates an exemplary input display in variation 1. As illustrated in FIG. 8, the guide display region 83 and the input display region 85 are prepared with respect to the line of sight position 81. An auxiliary line 91 is displayed in the input display region 85. An input display 93 is displayed so as to cross the auxiliary line 91. In the example of FIG. 8, as an example, when the input display 93 crosses the auxiliary line 91, it is determined that an input operation from the upside to the downside is performed. In addition, a user can visually confirm easily that an input operation to cross the auxiliary line 91 is performed.

In this variation, a reference that is used when a user inputs a movement on the touch panel 23 can be indicated such that the user can easily perform a desired input. Further, the type of an input detected by the portable terminal device 1 can be easily identified.

### <Variation 2>

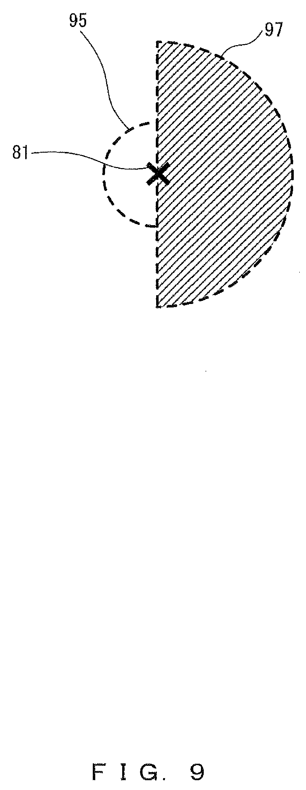

With reference to FIGS. 9-11, a variation of a guide display region and an input display region is described below. FIGS. 9-11 illustrate variations of a guide display region and an input display region. In the example illustrated in FIG. 9, a guide display region 95 is a region having the shape of a left-hand side semicircle having a first radius with the line of sight position 81 as a center. An input display region 97 may be a region having the shape of a right-hand side semicircle having a second radius that is greater than the first radius.

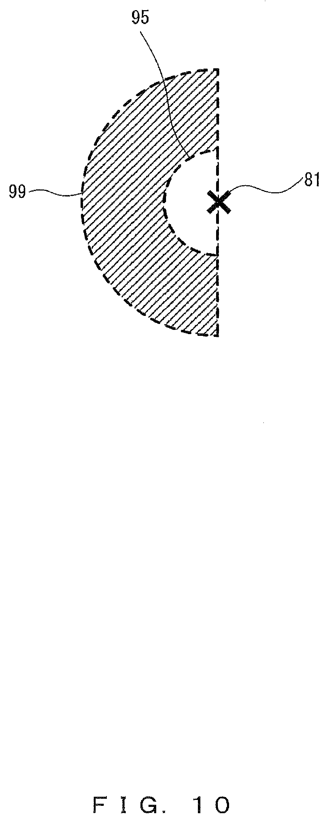

In the example illustrated in FIG. 10, an input display region 99 may be a region having the shape of a left-hand side semicircle having a second radius that is greater than a first circle with the line of sight position 81 as a center, and may be a region other than the guide display region 95.

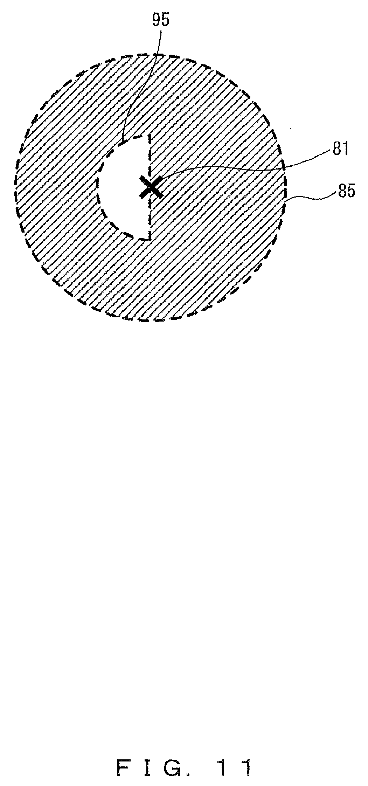

In the example illustrated in FIG. 11, the input display region 85 may be a region having the shape of a circle having a second radius that is greater than a first radius with the line of sight position 81 as a center, and may be a region other than the guide display region 95.

In all of the cases illustrated in FIGS. 9-11, the input display region 85, 97, or 99 includes a point that is located farther from the line of sight position 81 than all of the points in the guide display region 95. The portable terminal device 1 displays, for example, the input guide 57 in the guide display region 95, and displays an input in one of the input display regions 85, 97, and 99 so as to achieve an input method for confirming a movement while referring to the input guide 57 with a line of sight fixed in the line of sight position 81.

In the embodiment above and variations 1 and 2, the guide display regions 59, 83, and 95 are examples of the first region, and the input display regions 61, 85, 97, and 99 are examples of the second region. The guide 57 is an example of the first information, and the input display 65, 79, and 93 are examples of the second information. The display position determination unit 37 is an example of the first region determination unit, and the input display region determination unit 43 is an example of the second region determination unit.

The present invention is not limited to the embodiment above, and various configurations and embodiments can be employed without departing from a scope of the present invention. As an example, the line of sight detector 21 is not limited to a device including a camera, and may be another device that, for example, detects a line of sight by detecting a movement of facial muscles.

For a trigger for detection of a line of sight position, information relating to a line of sight such as a gaze or a blink, information relating to a movement of fingers such as tapping or swiping, voice, or input means for inputting other information such as a data-glove can be used. By performing setting so as to initiate detection of a line of sight when an input as a trigger is performed, power consumption can be reduced from that when the detection of a line of sight is always running.

An input method for selecting an option is not limited to a method using the touch panel 23, and may be a method using another device that can detect a movement, such as a data-glove. An input operation for selecting an option may be performed according to a temporal change. A device used in this case is a device that detects a temporal change. As an example, an input operation can be performed by pressing a button strongly or softly or changing a distance in a depth direction to a terminal. In this case, by using a characteristic whereby a change in color or the like may be sensed more easily in the peripheral vision, colors in the entirety of the second region may be changed so as to enable reporting of an input state.

The display position determination information 47 is exemplary, and another form such as information using another parameter may be employed. As an example, specification using a viewing angle may be employed. As an example, the guide display region may be a region obtained by a viewing angle of 2 degrees, and the input display region may be a region obtained by a viewing angle of 5 degrees.

In the embodiment above, when an input operation is not performed during a specified time period after the input guide 57 is displayed so as to enter into a state in which an input can be received, the input guide is removed; however, the input guide may be fixed when it is determined that an operation target is being gazed at. This allows the input guide to be easily recognized. It may be determined that the operation target is being gazed at, for example, when a time period during which a line of sight is within a specified range including the operation target is longer than a specified time period.

In detecting an operation target, the operation target may be detected from a position of a cursor near the line of sight position. In this case, a process of regarding the cursor as the line of sight position is performed. This enables an operation target to be detected with a higher accuracy than in a case using the line of sight position.

A portion of the input guide may be transparently displayed. As a result, even when the input display region at least partially overlaps the input guide 57, the overlapping portion can be recognized, and both the input display region and the input guide 57 can be recognized simultaneously.

When the input guide is displayed and an operation is not performed during a specified time period, it may be determined that a user does not intend to perform an operation, and a display of the input guide may be removed. When the line of sight position is located far from a detected operation target by a specified distance or more, it may be determined that a user does not intend to perform an operation. This allows the following operation to be ready to be accepted and power consumption to be reduced. An input method displayed in the input guide is not limited to an input method using one input means. It is preferable that the same operation be performed with a plurality of input means.

The input guide 57 can take various forms. As an example, in an input method using a combination of a plurality of movements, such as a hierarchical menu, the input guide 57 may be displayed so as to be divided for each of the movements. As a variation of FIG. 9, the input display region 97 may be displayed on a side closer to a position in which an input is detected on the touch panel 23 so as to easily confirm a movement. The shapes of the guide display region and the input display region are not limited to the above, and various shapes and positional relationships can be employed.

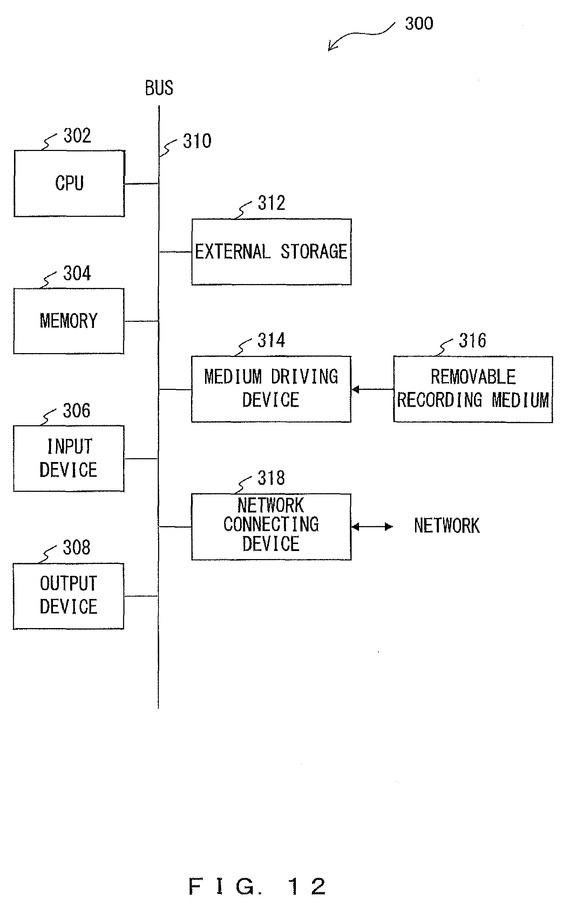

An example of a computer employed in common in order to cause the computer to perform operations in input methods in the embodiment above and variations 1 and 2 is described. FIG. 12 is a block diagram illustrating an example of a hardware configuration of a typical computer. As illustrated in FIG. 12, in a computer 300, a Central Processing Unit (CPU) 302, a memory 304, an input device 306, an output device 308, an external storage 312, a medium driving device 314, a network connecting device 318, and the like are connected via a bus 310.

The CPU 302 is a processing unit that controls an operation of the entirety of the computer 300. The memory 304 is a storage that stores a program for controlling the operation of the computer 300 and/or that is used as a working area as needed in executing the program. Examples of the memory 304 include a Random Access Memory (RAM) and a Read Only Memory (ROM). The input device 306 is a device that, upon receipt of an input from a user of a computer, obtains inputs of various pieces of information from the user that are associated with the content of the input, and transmits the obtained input information to the CPU 302. Examples of the input device 306 include a keyboard and a mouse. The output device 308 is a device that outputs a process result of the computer 300, and examples of the output device 308 include a display. As an example, the display displays text or an image according to display data transmitted from the CPU 302.

The external storage 312 is a storage such as a hard disk, and is a device that stores various control programs executed by the CPU 302, obtained data, and the like. The medium driving device 314 is a device that performs writing to and reading from a removable recording medium 316. The CPU 302 may be configured to perform various control processes by loading and executing a specified control program stored in the removable recording medium 316 via the recording medium driving device 314. Examples of the removable recording medium 316 include a Compact Disc (CD) -ROM, a Digital Versatile Disc (DVD), and a Universal Serial Bus (USB) memory. A network connecting device 318 is an interface device that manages the transmission of various kinds of data from/to the outside via a wired or wireless network. The bus 310 is a communication path that connects the devices above to each other so as to communicate data.

A program for causing a computer to perform the input methods in the embodiment above and variations 1 and 2 is stored, for example, in the external storage 312. The CPU 302 reads the program from the external storage 312, and causes the computer 300 to perform an input operation. In this case, a control program for causing the CPU 302 to perform an input process is prepared, and is stored in the external storage 312. A specified instruction is issued from the input device 306 to the CPU 302 so as to read the control program from the external storage 312 and execute the program. The program may be stored in the removable recording medium 316.

### Explanation of Letters or Numerals

- 1: Portable terminal device
- 3: Processing unit
- 5: Storage
- 7: ROM
- 9: RAM
- 11: Communication unit
- 13: Antenna
- 15: VOICE input/output unit
- 17: Speaker
- 19: Microphone
- 21: Line of sight detector
- 23: Touch panel
- 25: Display
- 31: Line of sight detector
- 33: Operation target detector
- 35: Guide generator
- 37: Display position determination unit
- 39: Guide display
- 41: Input detector
- 43: Input display region determination unit
- 45: Input display
- 47: Display position determination information
- 51: Exemplary display
- 53: Hand
- 55: Line of sight position
- 57: Input guide
- 59: Guide display region
- 61: Input display region

## Claims

1. An information processing device comprising:
a line of sight detector (21,31) that detects a line of sight of a user;
a first region determination unit (3,37) that determines a first region on a display screen in which first information indicating an input method using a movement of the user is displayed, in accordance with a line of sight position on the display screen of the detected line of sight;
a first display controller (3,39) that displays the first information in the first region;
an input detector (3,41) that detects an input from the user;
a second region determination unit (3,43) that determines a second region in which second information indicating a trace that corresponds to the movement of the user for the detected input is displayed, the second region being a region other than the first region and including a point located farther from the line of sight position than the first region; and
a second display controller (3,45) that displays the second information in the second region.

2. The information processing device according to claim 1, wherein
the second region is a region adjacent to the outside of the first region.

3. The information processing device according to claim 1, wherein
the input detector detects an input on the display screen, and
the second region includes a region between a position on the display screen in which the input is detected and the first region.

4. The information processing device according to any one of claims 1 to 3, wherein
an auxiliary line that is a reference for the input is displayed in the second region, and
the input detector detects a relative movement with respect to the auxiliary line.

5. The information processing device according to any one of claims 1 to 4, wherein
the first region corresponds to a region in which a central vision is realized, and the second region corresponds to a region in which a peripheral vision is realized.

6. A program for causing a computer to execute a process, the process comprising:
detecting a line of sight of a user;
determining a first region on a display screen in which first information indicating an input method using a movement of the user is displayed, in accordance with a line of sight position on the display screen of the detected line of sight;
determining a second region in which second information indicating a trace that corresponds to the movement of the user for an input from the user is displayed, the second region being a region other than the first region and including a point located farther from the line of sight position than the first region;
displaying the first information in the first region;
detecting the input from the user; and
displaying the second information in the second region.

7. The program according to claim 6, wherein
the second region is a region adjacent to the outside of the first region.

8. The program according to claim 6, wherein
the detecting detects the input on the display screen, and
the second region includes a region between a position on the display screen in which the input is detected and the first region.

9. The program according to any one of claims 6 to 8, wherein
an auxiliary line that is a reference for the input is displayed in the second region, and a relative movement with respect to the auxiliary line is detected.

10. The program according to any one of claims 6 to 9, wherein
the first region corresponds to a region in which a central vision is realized, and the second region corresponds to a region in which a peripheral vision is realized.
